# EUROPÄISCHE PATENTSCHRIFT

(11) **EP 0 756 585 B1**
(45) Veröffentlichungstag und Bekanntmachung des Hinweises auf die Patenterteilung: **15.04.1998**
(21) Anmeldenummer: 95913021.2
(22) Anmeldetag: 11.03.1995
(51) Int. Cl.: C04B 12/04, C04B 28/26, C04B 41/50

(54) **SILIKATMASSE**
SILICATE COMPOUND
MATIERE AU SILICATE

(30) Priorität: 22.04.1994 DE 4413996
(43) Veröffentlichungstag der Anmeldung: 05.02.1997
(73) Patentinhaber: BRAAS GMBH, 61440 Oberursel (DE)
(72) Erfinder: DRECHSLER, Andreas, D-63500 Seligenstadt (DE); NEUPERT, Daniel, D-63755 Alzenau (DE); NEWHAM, Simon, D-63150 Heusenstamm (DE); RADEMACHER, Ingo, D-63179 Obertshausen (DE)
(74) Vertreter: Brüning, Rolf, Dr.rer.nat.
(86) Internationale Anmeldenummer: DE9500346
(87) Internationale Veröffentlichungsnummer: WO9529139

(56) Entgegenhaltungen:
- EP-A- 0 072 138
- EP-A- 0 114 965
- FR-A- 2 381 002
- US-A- 4 451 294
- DATABASE WPI Section Ch, Week 7844 Derwent Publications Ltd., London, GB; Class L02, AN 78-78783A & JP-A-53 109 512 ( NISSAN CHEM IND KK) , 25.September 1978

## Beschreibung

Die Erfindung betrifft eine Silikatmasse, die zumindest eine Alkalioxid und Siliziumdioxid enthaltende amorphe Bindermatrix aufweist und außerdem Oxide aus der Gruppe Aluminiumoxid, Calziumoxid, Titandioxid, Magnesiumoxid, Zirkondioxid und/oder Boroxid enthält.

Eine derartige Silikatmasse kann zur Beschichtung von Baukörpern, insbesondere von Dachpfannen, verwendet werden. Betondachsteine, das sind Dachpfannen aus Beton, werden zur Vermeidung von Ausblühungen und zur Erzielung eines ästhetischen Aussehens auf ihrer Oberfläche beschichtet. Die Beschichtung einer Dachpfanne ist im Laufe der Zeit einer starken Korrosion durch die Witterung ausgesetzt. Während bei starker Sonneneinstrahlung im Sommer die Temperatur an der Oberfläche bis auf ca. 80°C ansteigen kann, kann bei Frost im Winter die Temperatur bis auf minus 30°C absinken. Kritisch ist der Angriff durch Frost-Tau-Wechsel sowie durch sauren Regen. Üblicherweise werden Betondachsteine mit einer Beschichtung aus einer Kunststoffdispersionsfarbe geschützt.

Der Nachteil derartiger Kunststoffbeschichtungen besteht darin, daß die Beschichtung insbesondere gegen ultraviolette Strahlung nicht dauerhaft beständig ist, so daß sich die Beschichtung nach einigen Jahren zersetzt.

Aus der DE-A-25 39 718 B2 ist ein Verfahren bekannt zum Beschichten von vorgeformten Bauteilen auf der Basis anorganischer, übliche Zuschlagstoffe enthaltender Bindemittel mit glasurartigen silikat- und/oder phosphathaltigen Überzügen, wobei man aus dem anorganischen Bindemittel und Wasser und üblichen Zuschlagstoffen eine formbare Masse herstellt, aus dieser Bauteile formt, und auf die vorgeformten Bauteile eine wasserglas- und/oder phosphat- und metalloxidhaltige, gegebenenfalls Pigmente und Füllstoffe enthaltende wasserhaltige Paste in dünner Schicht aufträgt und anschließend härtet, wobei man in die Masse lösliche anorganische Salze in einer Mindestmenge von 0,5 Gew.%, bezogen auf das anorganische Bindemittel bzw. im Falle von Kalksandsteinen bezogen auf Bindemittel plus Zuschlagstoff einmischt, die die wasserhaltige Paste, von der 190 bis 400 g pro m² auf das vorgeformte Bauteil aufgebracht werden, in einen gelartigen, nicht fließfähigen Zustand überführen, worauf sowohl das vorgeformte Bauteil als auch die Beschichtung gehärtet werden. Zur Beschichtung werden wasserhaltige alkalihaltige Pasten aufgebracht mit 42 bis 63 Mol% SiO₂, 11 bis 27 Mol% Alkalioxid und zwischen 19 und 42 Mol% Metalloxid, bezogen auf das Gesamtgewicht dieser Komponenten. Als Metalloxide werden der Paste z.B. ZnO, MgO, PbO, CaO, B₂O₃ und/oder Al₂O₃ zugesetzt.

Rein rechnerisch ergibt sich daraus durch wechselweise Kombination der Unter- und Obergrenzen ein Molverhältnis von Siliziumdioxid zu Alkalioxid zwischen 1,56 und 3,82. In der Beschreibung und in den Ausführungsbeispielen ist allerdings lediglich die Verwendung von Wasserglas 37° bis 40° Bé erwähnt, bei dem das Molverhältnis von Siliziumdioxid zu Alkalioxid maximal 3,52 beträgt. Um eine derartige Paste in einen gelartigen, nicht fließfähigen Zustand zu überführen ist das im Hauptanspruch der DE-25 39 718 B2 zwingend enthaltene Merkmal der Zugabe von löslichen anorganischen Salzen erforderlich. Gemäß dem hier beschriebenen Verfahren wird die Paste auf das vorgeformte Bauteil aufgebracht und gemeinsam mit diesem entweder im Autoklaven unter Druck bei höheren Temperaturen oder durch rein thermische Behandlung bei Normaldruck ausgehärtet.

Aus der EP 0 247 910 ist eine anorganische Silikatbeschichtung bekannt, bei der die Bindermatrix bezogen auf Feststoffe ungefähr 100 Gew.Teile Kaliumsilikat, ungefähr 10 bis ungefähr 40 Gew.Teile Feinpartikel aus Siliziumdioxid und ungefähr 15 bis ungefähr 100 Gew.Teile Perlglanzpigment enthält. Bei Verwendung von Wasserglas mit einem Molverhältnis von Siliziumdioxid zu Alkalioxid von 3,95 kann das Molverhältnis von Siliziumdioxid zu Alkalioxid in der Beschichtung bis zu 6,15 betragen. Als Verfahren zur Herstellung eines beschichteten Gegenstands ist in der EP 0 247 910 B1 angegeben, daß die Beschichtungsmasse auf das Substrat aufgebracht wird und anschließend zur Härtung gemeinsam mit diesem auf eine Temperatur von ungefähr 200°C bis ungefähr 400°C gebracht werden muß. Das Perlglanzpigment ist in Form von Partikeln in der Beschichtung enthalten, wobei die Partikel von der Bindermatrix umgeben sind. Über den Zusatz weiterer oxidischer Bestandteile ist der EP 0 247 910 kein Hinweis zu entnehmen.

Aufgabe der vorliegenden Erfindung ist es, eine sowohl einen Formkörper als auch eine Beschichtung eines Substrats bildende von organischen Zusätzen freie Silikatmasse zu schaffen, die beständig ist gegen Angriffe durch die Witterung, insbesondere bei Frost-Tau-Wechsel, sowie gegen den Angriff durch Säuren, Laugen oder Bewuchs. Die Beschichtung soll durch einfache Verfahren, beispielsweise durch Streichen, Rollen, Gießen oder Sprühen auf ein Substrat aufbringbar sein und bei einer Temperatur von weniger als 200°C, vorzugsweise bei weniger als 100°C, aushärten.

Die Aufgabe wird erfindungsgemäß dadurch gelöst, daß die amorphe Bindermatrix 4 bis 25 Mol Siliziumdioxid pro Mol Alkalioxid enthält, daß das Alkalioxid Lithium-, Natrium- und/oder Kaliumoxid ist und daß die amorphe Bindermatrix außerdem in homogener Verteilung pro 100 Mol Siliziumdioxid bis zu 80 Mol Aluminiumoxid und/oder bis zu 45 Mol Kalziumoxid, Titandioxid, Magnesiumoxid, Zirkondioxid und/oder Boroxid enthält.

Wenn hier Alkali- oder andere Oxide genannt werden, so entspricht dies der in der Silikatanalyse üblichen Angabe von Metallgehalten als Oxide, auch wenn diese tatsächlich in Form chemischer Verbindungen wie Silikate, Aluminate oder dergleichen vorliegen.

Die Bindermatrix enthält einen sehr hohen Anteil von Siliziumdioxid, nämlich 4 bis 25 Mol Siliziumdioxid pro Mol Alkalioxid. Daher ist die erfindungsgemäße Silikatmasse äußerst beständig gegen die in der Aufgabenstellung genannten Angriffe und dennoch in Form einer wäßrigen Silikatsuspension auf eine Dachpfanne aufbringbar. Die Silikatsuspension härtet auf der Dachpfanne bereits bei einer Temperatur von weniger als 100°C zu einer eine Beschichtung bildenden festen Silikatmasse aus. Dies ist insbesondere für die Anwendung auf einem Betondachstein wichtig, weil die Aushärtung auch bei Raumtemperatur erfolgen kann.

Der Gehalt an Aluminiumoxid von bis zu 80 Mol pro 100 Mol Siliziumdioxid bewirkt eine besonders hohe chemische Beständigkeit der Silikatmasse. Gehalte von bis zu 45 Mol an Kalziumoxid, Titandioxid, Magnesiumoxid, Zirkondioxid und/oder Boroxid pro 100 Mol Siliziumdioxid erhöhen ebenfalls die Beständigkeit der Silikatmasse. Die Zugabe der vorstehend genannten Stoffe erhöht sowohl die hydrolytische Beständigkeit der Silikatmasse, als auch deren Beständigkeit gegen den Angriff von insbesondere Alkalien sowie dem Angriff durch Säuren, beispielsweise durch saueren Regen. Besonders wirksam sind Aluminium und Kalzium.

Die Silikatmasse wird vorteilhafterweise aus einem alkalischen Kieselsol mit einem Feststoffgehalt von 30 - 70 Gew.% hergestellt. Das alkalische Kieselsol sollte eine mittlere Partikelgröße von weniger als 130 nm besitzen.

Die Herstellung der Silikatmasse aus einem alkalischen Kieselsol mit dieser Partikelgröße hat den besonderen Vorteil, daß eine äußerst homogene Bindermatrix aus der Siliziumdioxidquelle und der Alkaliquelle erzielt wird. Auf diese Weise läßt sich in der Bindermatrix der ausgehärteten Silikatmasse ein Gefüge erzielen, das dem eines Glases entspricht. Somit ist es möglich, bei Temperaturen von weniger als 100°C eine glasige Silikatmasse zu erzeugen.

Aufgrund der niedrigen Temperatur bei der Herstellung ist es möglich, große Formkörper zu erzeugen die eine hohe Formbeständigkeit besitzen und frei von Temperaturspannungen sind.

Eine besonders rißfreie Silikatmasse mit glatter Oberfläche wird erhalten, wenn die Bindermatrix einen kristallinen Füllstoff aus der Klasse der Schichtsilikate enthält. Der Füllstoff kann beispielsweise aus Glimmer oder auch aus einem Gemisch von verschiedenen Schichtsilikaten bestehen.

Eine besonders glatte und glänzende Oberfläche der Silikatmasse wird erhalten, wenn die Bindermatrix einen kristallinen Füllstoff aus der Klasse der Calcite enthält.

Die Silikatmasse kann außerdem Hüttensand und/oder Zement enthalten. Als Hüttensand wird glasige Hochofenschlacke bezeichnet. Bei der Herstellung wird der Hüttensand bzw. der Zement nach dem Eintragen in die wäßrige Lösung von der Oberfläche her zumindest angelöst, wenn nicht vollständig aufgelöst, so daß deren Bestandteile homogen in der Bindermatrix verteilt werden.

Die Silikatmasse kann außerdem Glasmehl mit einem Gehalt an Kalziumoxid von wenigstens 30 Gew.%, einen SiO₂-Gehalt von weniger als 70 Gew.% und einen Gehalt an Aluminiumoxid von weniger als 20 Gew.% enthält. Das Glasmehl wird wie Hüttensand oder Zement nach dem Eintragen in die wäßrige Lösung gelöst.

Zur Anpassung an eine gewünschte Farbe kann die Silikatmasse Farbpigmente enthalten.

Die Silikatmasse kann zum Schutz vor Verwitterung verwendet werden, wenn sie als Beschichtung auf ein Substrat aufgebracht ist. Das Substrat kann beispielsweise eine Dachpfanne sein.

Die Dicke der als Beschichtung aufgebrachten Silikatmasse kann im Mittel zwischen 0,02 mm und 2 mm liegen, vorzugsweise bei etwa 0,1 mm.

Die Silikatsuspension zur Beschichtung einer Dachpfanne kann auf der Basis einer wäßrigen alkalischen Silikatlösung mit einem Molverhältnis von Siliziumdioxid zu Alkalioxid von weniger als 2 hergestellt werden, indem die Silikatlösung zur Erhöhung des Siliziumdioxid-Anteils beispielsweise mit Kieselsol oder einem der anderen vorstehend genannten Stoffe mit einem hohen Siliziumdioxid-Gehalt versetzt wird. Bevorzugt wird eine kaliumhaltige Silikatlösung, jedoch kann auch eine lithium- oder natriumhaltige Silikatlösung oder eine Mischung dieser verwendet werden. Bei Erhöhung des Siliziumdioxid-Gehalts durch Zugabe von Kieselsol entsteht nach dem Aushärten eine chemisch sehr reine Silikatmasse. Eine sehr preiswerte Silikatmasse wird bei Verwendung von Flugasche erhalten.

Es versteht sich von selbst, daß auch die Lösung eines reinen Alkalisilikats bzw. deren Mischungen verwendet werden können, oder daß Kieselsäure oder Stoffe mit hohen Siliziumdioxid-Gehalten in Natronlauge oder Kalilauge aufgelöst werden können.

Das Aufbringen der Silikatsuspension zum Beschichten eines Substrats kann durch Streichen, Rollen, Gießen oder vorzugsweise durch Sprühen erfolgen. Beim anschließenden Trocknen erhärtet die wäßrige Silikatsuspension zu einer die Beschichtung bildenden Silikatmasse. Als Substrat kann beispielsweise Frischbeton, ausgehärteter Beton, oder Metall oder ein mineralischer Grundkörper eingesetzt werden. Dabei werden auch poröse Oberflächen mit einem geschlossenen Film abgedichtet.

Die erfindungsgemäße Silikatmasse eignet sich auch hervorragend zur Beschichtung von Granulaten, Sanden oder Füllstoffen.

Die Silikatsuspension ist praktisch für alle Anwendungen geeignet, bei denen derzeit zementgebundene Bindemittel eingesetzt werden, beispielsweise zum Vergießen von Fugen oder zum Verkleben von Baustoffen.

Außerdem kann die Silikatsuspension zur Erzielung von Dekorzwecken oder Verzierungen eingesetzt werden. Durch Verwendung von Silikatsuspensionen mit unterschiedlichen Farben kann ein Marmorierungseffekt in der Silikatmasse erreicht werden.

Die Herstellung erfindungsgemäßer Silikatmassen, die unterschiedlich zusammengesetzt sind, und deren Anwendung wird nachfolgend anhand von zwölf Ausführungsbeispielen beschrieben.

### Ausführungsbeispiel 1

Zu 1440 g eines wäßrigen alkalischen Kieselsols mit einem Feststoffgehalt von 30% und einer mittleren Partikelgröße von 40 nm wurden innerhalb von 3 Minuten unter Rühren 600 g Kaliumsilikatlösung mit einem Feststoffgehalt von 45 Gewichts-% und einem Molverhältnis von Siliziumdioxid zu Alkalioxid von 1,3 zugegeben. Nach Zugabe der Kaliumsilikatlösung wurde 5 Minuten lang dispergiert. Das Molverhältnis von Siliziumdioxid zu Alkalioxid betrug nunmehr 5,8. Der Ansatz wurde vier Tage in einem verschlossenen Polyethylen-Gefäß bei Raumtemperatur gelagert, anschließend wurden 756 g Glimmer mit einer mittleren Partikelgröße von 36 µm zusammen mit 216 g einer wäßrigen Pigmentsuspension mit einem Anteil von 61,5 Gewichts-% Eisenoxidpigment mit einer mittleren Partikelgröße von 0,1 µm zugegeben und 5 Minuten bei 1000 U/min dispergiert. Anschließend wurde die wäßrige Silikatsuspension auf die der Witterung ausgesetzte Oberfläche eines frisch gehärteten Betondachsteins gesprüht und 1 Stunde lang bei Raumtemperatur getrocknet. Der Betondachstein wies eine matte rot gefärbte im Mittel 0,1 mm dicke Beschichtung auf.

### Ausführungsbeispiel 2

Zu 400 g einer alkalischen Kaliumsilikatlösung mit einem Feststoffgehalt von 45 Gewichts-% und einem Molverhältnis von Siliziumdioxid zu Alkalioxid von 1,3 wurden 80 g reines Kaliummetaborat gegeben, diese Suspension wurde auf 80°C erwärmt bis eine klare Lösung entstand und diese dann auf Raumtemperatur abgekühlt. Die abgekühlte Lösung wurde in 1400 g eines wäßrigen alkalischen Kieselsols mit einem Feststoffgehalt von 30 Gewichts-% und einer mittleren Partikelgröße von 40 nm eingerührt. Das Molverhältnis von Siliziumdioxid zu Alkalioxid lag nunmehr bei 5,9. Der gesamte Ansatz wurde dispergiert, und anschließend wurden 40 g amorphes Aluminiumoxid mit einer mittleren Partikelgröße von weniger als 13 nm zugegeben. Der Gehalt an Aluminiumoxid betrug 4,7 Mol pro 100 Mol Siliziumdioxid. Anschließend wurde die Mischung dispergiert und in einem verschlossenen Polyethylen-Gefäß einen Tag lang bei Raumtemperatur gelagert. Anschließend wurden dem Ansatz 624 g Glimmer mit einer mittleren Partikelgröße von 36 µm sowie 93,6 g einer wäßrigen Pigmentsuspension mit einem Gehalt von 61,5 Gewichts-% Eisenoxidpigment mit einer mittleren Partikelgröße von 0,1 µm zugegeben. Nach Dispergieren wurde die Silikatsuspension mit einem Pinsel auf die der Witterung ausgesetzte Oberfläche eines gehärteten Betondachsteins aufgetragen und 24 Stunden lang bei Raumtemperatur getrocknet. Anschließend wurde der beschichtete Betondachstein zwei Stunden lang bei 120°C getempert. Der Betondachstein wies eine matte rot gefärbte im Mittel 0,1 mm dicke Beschichtung auf.

### Ausführungsbeispiel 3

150 g einer alkalischen Kaliumsilikatlösung mit einem Feststoffgehalt von 45 Gewichts-% und einem Molverhältnis von Siliziumdioxid zu Alkalioxid von 1,3 wurden in einem Metallbecher vorgelegt. Unter Rühren wurden 330 g Schmelzkammerflugasche mit einem hohen amorphen Anteil zugegeben und diese Suspension kurz dispergiert. Die Schmelzkammerflugasche wies folgende Gehalte an als Oxide berechneten Gewichtsbestandteilen auf: Siliziumdioxid 46%, Aluminiumoxid 30%, Calziumoxid 5,3%, Magnesiumoxid 3,5%, Kaliumoxid 5,0% und Natriumoxid 1,0%. Nach dem Dispergieren wurden 50 g amorphes Aluminiumoxid mit einer mittleren Partikelgröße von 13 nm und 45 g Eisenoxidpigment mit einer mittleren Partikelgröße von 0,1 µm unter Rühren zugegeben. Nach intensivem Rühren zum Homogenisieren wurden 60 g Wasser zugegeben. Das Molverhältnis von Siliziumdioxid zu Alkalioxid lag nunmehr bei 4,9 und der Gehalt an Aluminiumoxid betrug 49 Mol pro 100 Mol Siliziumdioxid. Der Anteil der zusätzlichen Oxide Calziumoxid und Magnesiumoxid betrug 20 Mol pro 100 Mol Siliziumdioxid. Die so entstandene Silikatsuspension wurde umgehend auf die der Witterung ausgesetzte Oberfläche eines frisch gehärteten Betondachsteins aufgesprüht und eine Stunde lang bei Raumtemperatur getrocknet. Der Betondachstein wies eine matte rot gefärbte im Mittel 0,1 mm dicke Beschichtung auf.

### Ausführungsbeispiel 4

Zu 100 g einer alkalischen Kaliumsilikatlösung mit einem Feststoffgehalt von 45 Gewichts-% und einem Molverhältnis von Siliziumdioxid zu Alkalioxid von 1,3 wurden bei 80°C unter Rühren 5 g Natriumtetraborat-10-hydrat (p.a.) gegeben und das Rühren fortgesetzt, bis eine klare Lösung entstanden war. Nach Abkühlung auf Raumtemperatur wurde die Lösung in 180 g eines wäßrigen alkalischen Kieselsols mit einem Feststoffgehalt von 30 Gewichts-% und einer mittleren Partikelgröße von 40 µm eingerührt. Anschließend wird der Ansatz noch 5 Minuten gerührt. Das Molverhältnis von Siliziumdioxid zu Alkalioxid lag nunmehr bei 4,4 und der Gehalt an Boroxid betrug 2 Mol pro 100 Mol Siliziumdioxid. Nach viertägiger Lagerung in einem geschlossenen Polyethylen-Gefäß bei Raumtemperatur wurde die Silikatsuspension auf die der Witterung ausgesetzte Oberfläche eines gehärteten Betondachsteins mit einem Pinsel aufgetragen und eine Stunde lang bei Raumtemperatur getrocknet. Der Betondachstein wies ein farblose transparente leicht glänzende im Mittel 0,1 mm dicke Beschichtung auf.

### Ausführungsbeispiel 5

Zu 100 g einer wäßrigen Kaliumsilikatlösung mit einem Feststoffgehalt von 45 Gewichts-% und einem Molverhältnis Siliziumdioxid zu Kaliumoxid von 1,3 wurden 20 g reines Kaliummetaborat gegeben und die Suspension auf 80°C erwärmt bis eine klare Lösung entstanden war. Nach Abkühlung auf Raumtemperatur wurde die Lösung in 740 g eines wäßrigen alkalischen Kieselsols mit einer mittleren Partikelgröße von 40 nm und einem Feststoffgehalt von 30 Gewichts-% eingerührt, das Rühren fünf Minuten lang fortgesetzt und der Ansatz einen Tag lang in einem verschlossenen Polyethylen-Gefäß bei Raumtemperatur gelagert. Das Molverhältnis von Siliziumdioxid zu Alkalioxid lag nunmehr bei 11,5 und der Gehalt an Boroxid betrug 2 Mol pro 100 Mol Siliziumdioxid. Anschließend wurden 273 g Glimmer mit einer mittleren Partikelgröße von 36 µm und 43 g einer wäßrigen Pigmentsuspension mit einem Gehalt von 61,5 Gewichts-% Eisenoxidpigment mit einer mittleren Partikelgröße von 0,1 µm zugegeben. Diese Mischung wurde anschließend 5 Minuten lang dispergiert. Die dann fertige Silikatsuspension wurde mit einem Pinsel auf die der Witterung ausgesetzte Oberfläche eines vorgehärteten Betondachsteins aufgetragen. Die Trocknung erfolgte während eines Tages bei Raumtemperatur und anschließend eine Stunde lang bei 190°C. Der Betondachstein wies eine matte rot gefärbte im Mittel 0,1 mm dicke Beschichtung auf.

### Ausführungsbeispiel 6

Zu 200 g einer 5,6 molaren Natronlauge wurden 100 g reines Kaliummetaborat gegeben. Die Suspension wurde anschließend unter Rühren auf 80°C erwärmt bis eine klare Lösung entstanden war. Nach Abkühlung auf Raumtemperatur wurde die Lösung unter Rühren zu 827 g Kieselsol mit einem Feststoffgehalt von 30 Gewichts-% und einer mittleren Partikelgröße von 40 nm gegeben. Die entstandene Mischung wurde 5 Minuten dispergiert. Der Ansatz wurde einen Tag lang in einem Polyethylen-Gefäß bei Raumtemperatur gelagert. Das Molverhältnis von Siliziumdioxid zu Alkalioxid betrug 4,2. Der Anteil an Boroxid betrug 11 Mol pro 100 Mol Siliziumdioxid. Anschließend wurden am Dissolver 413 g Glimmer mit einer mittleren Partikelgröße von 36 µm und 105 g einer wäßrigen Pigmentsuspension mit einem Gehalt von 61,5 Gewichts-% Eisenoxidpigment mit einer mittleren Partikelgröße von 0,1 µm eingerührt. Diese Mischung wurde anschließend 5 Minuten lang dispergiert. Die fertige Silikatsuspension wurde mit einem Pinsel auf die der Witterung ausgesetzte Seite eines vorgehärteten Betondachsteins aufgetragen und eine Stunde lang bei Raumtemperatur getrocknet. Der Betondachstein wies eine matte rot gefärbte im Mittel 0,1 mm dicke Beschichtung auf.

### Ausführungsbeispiel 7

150 g einer alkalischen Kaliumsilikatlösung mit einem Feststoffgehalt von 45 Gewichts-% und einem Molverhältnis von Siliziumdioxid zu Alkalioxid von 1,3 wurden in einem Metallbecher vorgelegt. Unter Rühren wurden 330 g Schmelzkammerflugasche mit einem hohen amorphen Anteil zugegeben und diese Suspension kurz dispergiert. Die Schmelzkammerflugasche wies folgende Gehalte an als Oxide berechneten Gewichtsbestandteilen auf: Siliziumdioxid 46%, Aluminiumoxid 30%, Calziumoxid 5,3%, Magnesiumoxid 3,5%, Kaliumoxid 5,0% und Natriumoxid 1,0%. Nach dem Dispergieren wurden 30 g amorphes Aluminiumoxid mit einer mittleren Partikelgröße von 13 nm und 45 g Eisenoxidpigment mit einer mittleren Partikelgröße von 0,1 µm unter Rühren zugegeben. Nach intensivem Rühren zum Homogenisieren wurden 60 g Wasser zugegeben. Das Molverhältnis von Siliziumdioxid zu Alkalioxid lag nunmehr bei 4,9 und der Gehalt an Aluminiumoxid betrug 42 Mol pro 100 Mol Siliziumdioxid. Der Anteil der zusätzlichen Oxide Calziumoxid und Magnesiumoxid betrug 20 Mol pro 100 Mol Siliziumdioxid. Die so entstandene Silikatsuspension wurde umgehend auf die der Witterung ausgesetzte Oberfläche eines frisch gehärteten Betondachsteins aufgegossen und einen Tag lang bei Raumtemperatur getrocknet. Der Betondachstein wies eine matte rot gefärbte im Mittel 1 mm dicke Beschichtung auf.

### Ausführungsbeispiel 8

Zu 467 g eines wäßrigen alkalischen Kieselsols mit einem Feststoffgehalt von 60 % und einer mittleren Partikelgröße von 40 nm wurden 133 g einer 5 molaren Kalilauge gegeben. Anschließend wurde die erhaltene Alkalisilikatlösung 5 Minuten lang dispergiert. Das Molverhältnis von SiO₂ zu Alkalioxid betrug nunmehr 15,5. Der Ansatz wurde anschließend in einem verschlossenen Polyethylen-Gefäß bei Raumtemperatur für ca. 1 h gelagert. Anschließend wurden 60 g Pigment mit einer mittleren Partikelgröße von 0,1 µm zugegeben. Die erhaltene Mischung wurde 5 Minuten lang dispergiert. Anschließend wurden unter Rühren 105 g Hüttensand und danach ein Gemenge von 84 g Glimmer mit einer mittleren Partikelgröße von 36 µm und 126 g Calcit mit einer mittleren Partikelgröße von 20 µm zugegeben. Diese Mischung wurde abschließend homogenisiert, und die entstandene Silikatsuspension zu scheibenförmigen Formkörpern mit einem Durchmesser von 40 mm und 4 mm Höhe mit einem Gewicht von 15 g vergossen. Diese Formkörper wurden innerhalb von zwei Tagen bei Raumtemperatur ausgehärtet. Die Formkörper zeigten keinerlei Risse und besaßen eine glänzende Oberfläche.

### Ausführungsbeispiel 9

Zu der in Ausführungsbeispiel 8 beschriebenen Silikatsuspension wurden 60 g Wasser zugegeben und dispergiert. Die verdünnte Silikatsuspension wurde anschließend auf einen frisch gebrannten Tondachziegel gesprüht und einen Tag lang bei Raumtemperatur getrocknet. Der erhaltene beschichtete Tondachziegel wies eine im Mittel 0,1 mm dicke Beschichtung mit glänzender Oberfläche auf.

### Ausführungsbeispiel 10

Zu 750 g eines wäßrigen alkalischen Kieselsols mit einem Feststoffgehalt von 50 % und einer mittleren Partikelgröße von 50 nm wurden 115 g einer 5 molaren Kalilauge zugegeben. Anschließend wurde die erhaltene Alkalisilikatlösung 5 Minuten lang dispergiert. Das Molverhältnis von SiO₂ zu Alkalioxid betrug nunmehr 23. Der Ansatz wurde anschließend in einem verschlossenen Polyethylen-Gefäß bei Raumtemperatur für ca. eine halbe Stunde gelagert. Anschließend wurden 86,5 g rotes Eisenoxid-Pigment mit einer mittleren Partikelgröße von 0,1 µm zugegeben. Die erhaltene Mischung wurde 5 Minuten lang dispergiert. Anschließend wurden unter Rühren 150 g Hüttensand und danach 303 g Glimmer mit einer mittleren Partikelgröße von 36 µm zugegeben. Diese Mischung wurde abschließend homogenisiert. Die so erhaltene Silikatsuspension wurde umgehend auf die der Witterung ausgesetzte Oberfläche eines frisch gehärteten Betondachsteins mit einem Pinsel aufgetragen. Der so erhaltene Betondachstein wurde einen Tag lang bei Raumtemperatur getrocknet. Der Betondachstein wies eine rot gefärbte im Mittel 0,1 mm dicke Beschichtung auf.

### Ausführungsbeispiel 11

Zu 255 g eines frisch hergestellten wäßrigen alkalischen Kieselsols mit einem Feststoffgehalt von 60 % und einer mittleren Partikelgröße von 40 nm wurden 145 g einer alkalischen Kaliumsilikatlösung mit einem Feststoffgehalt von 45 Gew.% und einem Molverhältnis von Siliziumdioxid zu Alkalioxid von 1,3 gegeben und 15 Minuten lang dispergiert. Das Molverhältnis von Siliziumdioxid zu Alkalioxid betrug nunmehr 7,9. Zu dem Ansatz wurden dann unter Rühren 40 g Pigment mit einer mittleren Partikelgröße von 0,1 µm und anschließend 70 g Hüttensand zügig zugegeben. Die erhaltene Mischung wurde dispergiert, bevor 140 g Glimmer mit einer mittleren Partikelgröße von 36 µm zugegeben wurden. Abschließend wurden noch 40 g Wasser zugegeben und der Ansatz homogenisiert. Die wäßrige Silikatsuspension wurde anschließend auf die der Witterung ausgesetzten Oberfläche eines frisch hergestellten Betondachsteinrohlings gesprüht und gemeinsam mit diesem während 6 Stunden bei 60°C ausgehärtet. Der erhaltene Betondachstein wies eine im Mittel ca. 0,1 mm dicke Beschichtung auf.

### Ausführungsbeispiel 12

Die gemäß Ausführungsbeispiel 11 hergestellte wäßrige Silikatsuspension wurde mit einem Pinsel auf je eine entfettete Glasplatte und eine Metallplatte aufgetragen. Diese Proben wurden bei Raumtemperatur innerhalb von mehreren Stunden getrocknet. Die erhaltenen Glas- und Metallplatten wiesen eine rißfreie im Mittel eine 0,3 mm dicke fest haftende Beschichtung auf.

## Patentansprüche

1. Silikatmasse, die zumindest eine Alkalioxid und Siliziumdioxid enthaltende amorphe Bindermatrix aufweist und außerdem Oxide aus der Gruppe Aluminiumoxid, Calziumoxid, Titandioxid, Magnesiumoxid, Zirkondioxid und/oder Boroxid enthält, wobei
die amorphe Bindermatrix 4 bis 25 Mol Siliziumdioxid pro Mol Alkalioxid enthält,
das Alkalioxid Lithium-, Natrium- und/oder Kaliumoxid ist und
die amorphe Bindermatrix außerdem in homogener Verteilung pro 100 Mol Siliziumdioxid bis zu 80 Mol Aluminiumoxid und/oder bis zu 45 Mol Kalziumoxid, Titandioxid, Magnesiumoxid, Zirkondioxid und/oder Boroxid enthält.

2. Silikatmasse nach Anspruch 1, dadurch gekennzeichnet,
daß diese aus einem alkalischen Kieselsol mit einem Feststoffgehalt von 30 - 70 Gew.% hergestellt ist.

3. Silikatmasse nach Anspruch 2, dadurch gekennzeichnet,
daß diese aus einem alkalischen Kieselsol mit einer mittleren Partikelgröße von weniger als 130 nm hergestellt ist.

4. Silikatmasse nach einem der Ansprüche 1 bis 3,
**dadurch gekennzeichnet,**
daß diese einen kristallinen Füllstoff aus der Klasse der Schichtsilikate enthält.

5. Silikatmasse nach einem der Ansprüche 1 bis 4,
**dadurch gekennzeichnet**,
daß diese einen kristallinen Füllstoff aus der Klasse der Calcite enthält.

6. Silikatmasse nach einem der Ansprüche 1 bis 5,
**dadurch gekennzeichnet**,
daß diese Hüttensand und/oder Zement enthält.

7. Silikatmasse nach einem der Ansprüche 1 bis 6,
**dadurch gekennzeichnet**,
daß die Silikatmasse Glasmehl mit einem Gehalt an Kalziumoxid von wenigstens 30 Gew.%, einen SiO₂-Gehalt von weniger als 70 Gew.% und einen Gehalt an Aluminiumoxid von weniger als 20 Gew.% enthält.

8. Silikatmasse nach einem der Ansprüche 1 bis 7,
**dadurch gekennzeichnet**,
daß diese außerdem Farbpigmente enthält.

9. Silikatmasse nach einem der Ansprüche 1 bis 8,
**dadurch gekennzeichnet**,
daß diese als Beschichtung auf ein Substrat aufgebracht ist.

10. Silikatmasse nach Anspruch 9,
**dadurch gekennzeichnet**,
daß das Substrat eine Dachpfanne ist.

11. Silikatmasse nach Anspruch 9 oder 10,
**dadurch gekennzeichnet**,
daß die Dicke der Beschichtung im Mittel zwischen 20 µm und 2 mm, vorzugsweise 0,1 mm beträgt.

## Claims

1. Silicate compound showing at least an amorphous bonding matrix containing alkali oxide and silicon dioxide and futhermore containing oxides of the group of alumium oxide, calcium oxide, titanium dioxide, magnesium oxide, zirconium dioxide and/or boric oxide,
the amorphous bonding matrix containing 4 to 25 moles of silicon dioxide per mole of alkali oxide,
the alkali oxide being lithium oxide, sodium oxide and/or potassium oxide and
the amorphous bonding matrix moreover containing up to 80 moles of aluminium oxide and/or up to 45 moles of calcium oxide, titanium oxide, magnesium oxide, ziconium dioxide and/or boric oxide per 100 moles of silicon dioxide, homogeneously allotted .

2. Silicate compound according to claim 1, characterized in that it is manufactured out of an alkaline silica colloidal solution with a solids content of 30-70 per cent in weight.

3. Silicate compound according to claim 2, characterized in that it is manufactured out of an alkaline silica colloidal solution with an average particle size of less than 130 nm.

4. Silicate compound according to one of claims 1 to 3, characterized in that it contains a crystalline filling material belonging to the class of the stratified silicates.

5. Silicate compound according to one of claims 1 to 4, characterized in that it contains a crystalline filling material belonging to the class of calcites.

6. Silicate compound according to one of claims 1 to 5, characterized in that it contains granulated blast furnace sand or cement.

7. Silicate compound according to one of claims 1 to 6, characterized in that the silicate compound contains glass powder with a content of potassium oxide of at least 30 per cent in weight, a content of SiO₂ of less than 70 per cent in weight and a content of aluminium oxide of less than 20 per cent in weight.

8. Silicate compound according to one of claims 1 to 7, characterized in that it furthermore contains colouring pigments.

9. Silicate compound according to one of claims 1 to 8, characterized in that it is applied on a substrate, building a coating.

10. Silicate compound according to claim 9, characterized in that the substrate is a roof tile.

11. Silicate compound according to claim 9 or 10, characterized in that the thickness of the coating amounts to an average value between 20 pm and 2 mm, preferably of 0.1 mm.

## Revendications

1. Matière au silicate présentant au moins une matrice amorphe en tant qu'agent agglutinant contenant de l'oxyde d'alcali et du dioxyde de silicium et contenant de plus des oxydes appartenant au groupe des oxydes d'aluminium, des oxydes de calcium, des dioxydes de titane, des oxydes de magnesium, des dioxydes de zirconium et/ou des oxydes boriques,
la matrice amorphe en tant qu'agent agglutinant contenant 4 à 25 moles de dioxyde de silicium par mole d'oxyde d'alcali,
l'oxyde d'alcali étant de l'oxyde de lithium, de sodium et/ou de potassium et
la matrice amorphe en tant qu'agent agglutinant contenant en outre, pour 100 moles de dioxyde de silicium, jusqu'à 80 moles d'oxyde d'aluminium et/ou jusqu'à 45 moles d'oxyde de calcium, de dioxyde de titane, d'oxyde de magnésium, de dioxyde de zirconium et/ou d'oxyde borique réparties de façon homogène.

2. Matière au silicate conformément à la revendication 1, **caractérisée en ce**
qu'elle est fabriquée à partir d'un sol silicieux dont la teneur en matières solides est de 30 à 70 % en poids.

3. Matière au silicate conformément a la revendication 2, **caractérisée en ce**
qu'elle est fabriquée à partir d'un sol silicieux alcalin d'une grosseur de particule moyenne de moins de 130 nm.

4. Matière au silicate selon l'une des revendications 1 à 3, **caractérisée en ce**
qu'elle contient une matière de remplissage cristalline de la classe des silicates stratifiés.

5. Matière au silicate selon l'une des revendications 1 à 4, **caractérisée en ce**
qu'elle contient une matière de remplissage cristalline de la classe des calcites.

6. Matière au silicate selon l'une des revendications 1 à 5, **caractérisée en ce**
qu'elle contient du laitier de haut fourneau granulé et/ou du ciment.

7. Matière au silicate selon l'une des revendications 1 à 6, **caractérisée en ce que**
la matière au silicate contient du verre pulvérisé d'une teneur en oxyde de calcium d'au moins 30 % en poids, une teneur de SiO₂ inférieure à 70 % en poids et une teneur en oxyde d'aluminium inférieure à 20 % en poids.

8. Matière au silicate selon l'une des revendications 1 à 7, **caractérisée en ce**
qu'elle contient en outre des pigments colorants.

9. Matière au silicate selon l'une des revendications 1 à 8, **caractérisée en ce**
qu'elle est appliquée sur un substrat, faisant revêtement.

10. Matière au silicate conformément à la revendication 9, **caractérisée en ce que**
le substrat est une tuile.

11. Matière au silicate conformément à la revendication 9 ou 10, **caractérisée en ce que**
l'épaisseur du revêtement est en moyenne de 20 µm à 2 mm, de préférence de 0,1 mm.
